# EUROPEAN PATENT APPLICATION

(11) **EP 4 446 971 A1**
(43) Date of publication of application: **16.10.2024**
(21) Application number: 23746623.0
(22) Date of filing: 06.01.2023
(51) Int. Cl.: G06Q 40/06

(54) **INFORMATION PROCESSING DEVICE, METHOD FOR CONTROLLING INFORMATION PROCESSING DEVICE, AND PROGRAM**

(30) Priority: 26.01.2022 JP 2022010188
(71) Applicant: Kotaeru Holdings Inc., Tokyo 100-6390 (JP)
(72) Inventor: MATSUDA Yoshinari, Tokyo 100-6326 (JP)
(74) Representative: Murgitroyd & Company
(86) International application number: PCT/JP2023/000190
(87) International publication number: WO 2023/145406

(57) **Abstract**

Provided is a means capable of improving utilization of assets in trust. Included are: an update means configured to update first trust information to reflect that stock acquisition rights of a trust indicated by the first trust information have been granted to a beneficiary depending on a response received by a response receiving means; a first calculation means configured to calculate an unrealized gain on stock acquisition rights pertaining to the first trust information updated by the update means; a second calculation means configured to calculate a payment value in a case of issuing, at a current time, the stock acquisition rights pertaining to the first trust information updated by the update means; and a replenishable number presentation means configured to present a replenishable number of stock acquisition rights that is obtained based on the unrealized gain calculated by the first calculation means and the payment value calculated by the second calculation means.

## Description

### Technical Field

The present invention relates to an information processing apparatus, a control method for the information processing apparatus, and a program.

### Background Art

Conventionally, stock options (referred to as "stock acquisition rights") that grant rights to purchase a company's own stock at an exercise price to an officer, an employee, or a related person (hereinafter referred to as "employee or the like") of the company are known. Regarding the stock acquisition rights, since a profit increases as the stock price of the company's own stock rises beyond the exercise price, employees or the like who are granted the stock acquisition rights make efforts to increase the value of the company in order to raise the stock price.

Patent Literature 1 discloses that a securities company lends funds to an employee or the like who has been granted stock acquisition rights as a measure against a case where the employee or the like is unable to exercise the stock acquisition rights due to inability to prepare funds for an exercise price. This makes it possible to promote the exercise of rights by allowing the employee or the like who is unable to exercise the rights due to lack of funds to obtain a loan.

### Citation List

### Patent Literature

Patent Literature 1: JP 2005-56095 A

### Summary of Invention

### Technical Problem

As in Patent Literature 1, it is common today to offer a loan when an employee or the like who already has stock acquisition rights is unable to prepare funds for an exercise price. A large profit can be earned as a capital gain at the time of exercising stock acquisition rights to acquire shares and selling the shares, by acquiring the shares of the company at a stock price when the stock price is low (for example, when the company is not listed on the stock market) and selling the shares of the company when the stock price is high (for example, after the company is listed on the stock market). Thus, an employee or the like who has been granted stock acquisition rights of an unlisted company can earn a large profit by exercising the stock acquisition rights when the company is listed.

Conventionally, when stock acquisition rights are issued, it is necessary to determine a grantee and the number of stock acquisition rights to be granted to the grantee. When stock acquisition rights, which produce value in the future as described above, are granted to an employee or the like without assessing an actual degree of contribution or the like, some adverse effects occur in some cases, such as a loss of work motivation of the employee or the like, and less contribution than expected by a management team. Meanwhile, recently, a scheme called a "trust-type stock option" has emerged, in which stock acquisition rights are temporarily entrusted to a trustee of a trust and are then granted to an employee or the like after assessing the degree of contribution or the like to the company. In this "trust-type stock option", a beneficiary designation right holder can designate a beneficiary in response to the occurrence of a beneficiary designation event. In the trust-type stock option, in a case where beneficiaries are not designated for all the stock acquisition rights at the time of occurrence of the beneficiary designation event, the remaining stock acquisition rights can be handed over to a new trust, so that the stock acquisition rights can be granted to employees or the like in stages. However, the stock acquisition rights as trust property decrease by an amount that the beneficiary has decided to withdraw. In this case, in order to avoid the decrease in the trust property, a trustor can newly entrust money or other property to the trustee to replenish the stock acquisition rights as the trust property. However, in a situation where the stock price is higher than at the time of previous issuance of the stock acquisition rights, it is usually a heavy burden for the trustor to entrust acquisition funds for stock acquisition rights based on this stock price to the trustee. Meanwhile, in the situation where the stock price is higher than at the time of previous issuance of the stock acquisition rights, there is usually an unrealized gain on the stock acquisition rights that have been previously issued and are managed as the trust property. Therefore, utilizing all or a part of the unrealized gain on the stock acquisition rights already managed as the trust property to set up new stock acquisition rights, rather than daring to request replenishment of new trust property from the trustor, can result in an increase in the unrealized gain, which can be given to the employees or the like, in a case where the stock price further rises after the earlier rise. However, there is currently no mechanism in which, stock acquisition rights or shares acquired by exercising stock acquisition rights are sold after understanding an unrealized gain on the stock acquisition rights and the obtained funds are used as a payment value (acquisition funds) for new stock acquisition rights as described above. Thus, trustors have lost an opportunity to set up new stock acquisition rights by utilizing the unrealized gain on the already managed stock acquisition rights.

In the case of a trust in which a beneficiary is not specified or a trust in which a beneficiary is specified but is subject to an unfulfilled condition, a procedure for a trustee to obtain a loan secured by trust property, in which it is necessary to confirm intent with a trustor or a trust administrator, for example, is more complicated than a procedure for a holder of stock acquisition rights to obtain a loan on the directly issued stock acquisition rights. Further, in the future, if investment with borrowed funds falls below par, only the borrowing remains, and even if a beneficiary is specified or the condition is fulfilled thereafter, the specified person may refuse to become the beneficiary. Unique considerations as described above have made it difficult for a system to utilize such secured borrowing to realize the unrealized gain on the stock acquisition rights that have been previously issued and use the obtained funds as a payment value (acquisition funds) for new stock acquisition rights. In addition, even in a case where a beneficiary is specified and is subject to no particular condition, if it is impossible or extremely difficult for the beneficiary to make a decision, there has been a similar difficulty.

The present invention has been made to solve the above problems, and an object thereof is to provide a means capable of improving utilization of assets in trust.

### Solution to Problem

The present invention is an information processing apparatus including: a first storage means configured to store first trust information that is information regarding that stock acquisition rights are entrusted by a trustor to a trustee; an inquiry means configured to inquire whether to designate a beneficiary for all or some of the stock acquisition rights a certain period of time prior to occurrence of a beneficiary designation event of a trust indicated by the first trust information; a response receiving means configured to receive a response to an inquiry made by the inquiry means; an update means configured to update the first trust information to reflect that the stock acquisition rights of the trust indicated by the first trust information have been granted to a beneficiary depending on a response received by the response receiving means; a first calculation means configured to calculate an unrealized gain on stock acquisition rights pertaining to the first trust information updated by the update means; a second calculation means configured to calculate a payment value in a case of issuing, at a current time, the stock acquisition rights pertaining to the first trust information updated by the update means; and a replenishable number presentation means configured to present a replenishable number of stock acquisition rights that is obtained based on the unrealized gain calculated by the first calculation means and the payment value calculated by the second calculation means.

### Advantageous Effects of Invention

According to the present invention, it is possible to provide a means capable of improving utilization of assets in trust.

### Brief Description of Drawings

Fig. 1 is a block diagram illustrating an outline of operation of a stock acquisition right management system according to a first embodiment of the present invention.
Fig. 2 is a block diagram illustrating a schematic configuration of the stock acquisition right management system 50 according to the first embodiment of the present invention.
Fig. 3 is a block diagram illustrating a configuration of each information processing apparatus illustrated in Fig. 2.
Fig. 4 is a diagram illustrating an example of trust information stored in a storage unit 103 of an information processing apparatus 16a illustrated in Fig. 2.
Fig. 5 is a diagram illustrating an example of loan information stored in the storage unit 103 of the information processing apparatus 16a illustrated in Fig. 2.
Fig. 6 is a flowchart illustrating processing by the stock acquisition right management system 50.
Fig. 7 is a flowchart illustrating processing by the stock acquisition right management system 50.

### Description of Embodiments

Hereinafter, embodiments of an information processing apparatus, a control method for the information processing apparatus, and a program according to the present invention will be described with reference to the drawings.

### [First Embodiment]

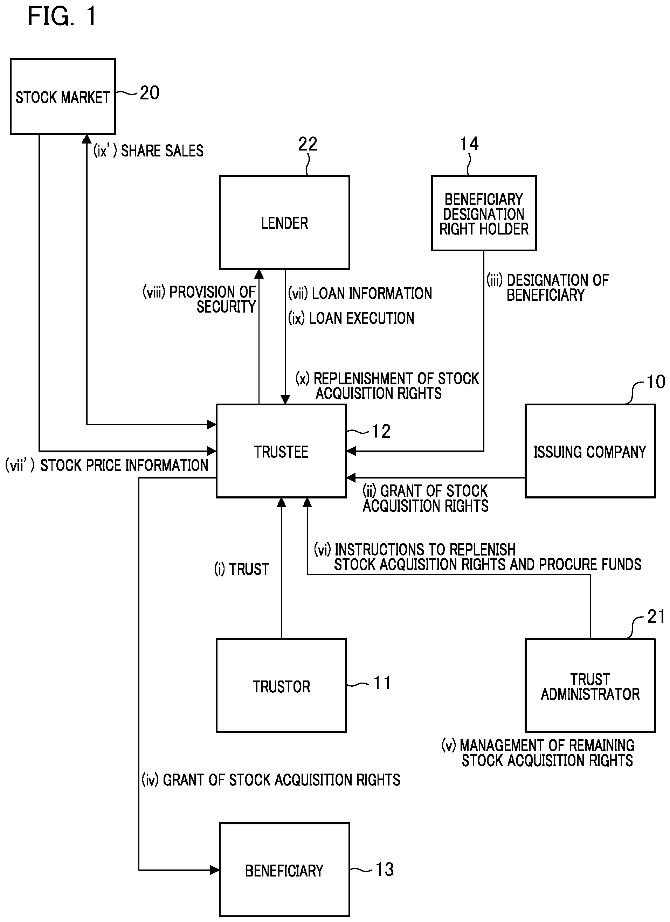

Fig. 1 is a block diagram illustrating an outline of operation of a stock acquisition right management system according to a first embodiment of the present invention. First, with reference to Fig. 1, a scheme relating to management of stock acquisition rights in trust in the present embodiment will be described.

Note that, in the present embodiment, a case where stock acquisition rights are managed in a trust will be described, but the present invention can also be applied to a case where other rights are entrusted. For example, the present invention can also be applied to a call option management system that manages a call option, which gives a right to acquire a stock at a strike price. A stock acquisition right is a right to acquire a stock from an issuing company at the current strike price, while a call option is a right to acquire a stock from a stockholder at the strike price rather than from an issuing company, that is, parties to which a request can be made are different. In the case of a call option, the management system is related to a scheme in which a major stockholder (usually an owner manager) entrusts a call option in order to transfer shares the major stockholder owns to a contributor in the future (a call option may be entrusted, or money may be entrusted for a trustee to pay to the major stockholder for a call option set by the major stockholder). The present invention can also be applied to a crypto-asset management system that manages crypto-assets (including non-fungible tokens, the same applies hereinafter). Crypto-assets are issued by an issuer and generally become more valuable as they are more liquid. Thus, there is a need to distribute them to influencers or collaborators (including officers and employees of the issuing corporation) and to enable more transactions to be made at a crypto-asset exchange. In the case of crypto-assets, the management system is related to a scheme in which an issuer or a person having many crypto-assets entrusts crypto-assets the issuer or the person own in order to transfer them to a contributor in the future (crypto-assets may be entrusted, or money or other assets may be entrusted for a trustee to acquire crypto-assets from the trustor or another third party). Furthermore, the present invention can be applied to a fund equity management system that manages a limited liability company, an investment pool, and trust units that are a basis of an investment fund. Fund equity is normally owned by a general partner, a limited partner, and the like who have formed an investment fund. There is a need, for example, by making it possible to transfer all or a part of the equity to an employee or a professional manager dispatched to an investee in the future, to increase a commitment of the employee, the professional manager, or the like to improve a corporate value of the investee of the investment fund. In the case of fund equity, the management system is related to a scheme in which an owner of fund equity entrusts fund units the owner owns in order to transfer them to a contributor in the future (fund units may be entrusted, or money or other assets may be entrusted for a trustee to acquire funds units).

An issuing company 10 is a company that issues stock acquisition rights targeted by the stock acquisition right management system of the present embodiment. A trustor 11 is, for example, a manager or a stockholder of the issuing company 10. Note that the issuing company 10 may make a contribution. A trustee 12, who is a trustee of a trust, manages and invests trust property. The trustee 12 is a trustee of a trust.

The trustor 11 entrusts money or other property to the trustee 12 (first trust). At the time of setting up a trust, a specific beneficiary is generally determined. However, (1) a method of determining a beneficiary may be determined without determining a specific beneficiary, or (2) while a specific beneficiary is determined, he/she may be subject to a condition (hereinafter, referred to as "beneficiary confirmation condition") for acquiring a right as a beneficiary and being confirmed as the beneficiary. Conventionally, in a case where stock acquisition rights are managed in a trust, following persons comprehensively have authority to give instructions on actions necessary for the management of trust property for the benefit of a beneficiary: a trust administrator who has authority to take any action in or out of court relating to rights of the beneficiary in his/her own name for the benefit of the beneficiary when the beneficiary currently does not exist; a trust protector who has authority to take specific actions in his/her own name for the benefit of the beneficiary when the beneficiary currently exists; and another beneficiary representative. In addition, a person specified in a trust contract or the like may have the authority described above. Here, a trust administrator 21 has the authority to instruct the trustee 12 on handling of the trust property.

In the present embodiment, as a case of a trust in which a specific beneficiary is not determined and a method for determining a beneficiary is determined, trust-type stock acquisition rights (market value issued stock acquisition rights trust (registered trademark)) are targeted. Regardless of whether stock acquisition rights are trust-type, an exercise price (or a formula thereof) is determined at the time of issuance of the stock acquisition rights. In the case of trust-type stock acquisition rights, while only a fixed number of stock acquisition rights are temporarily granted to a trustee of a trust, officers and employees are not specifically determined as grantees or the number of stock acquisition rights to be granted to the grantees is not determined. A beneficiary designation right holder 14 (who may be the issuing company 10, the trustor 11, or another person) determined as the beneficiary designation right holder by the trustor 11 can thereafter determine a grantee (beneficiary 13) and the number of stock acquisition rights to be granted to the grantee according to the degree of contribution to the issuing company 10.

Note that, in the case of trust-type stock acquisition rights, there is also another pattern in which a specific grantee and the number of stock acquisition rights to be granted to the grantee are provisionally determined and a trustee accepts a trust with a beneficiary confirmation condition set for the grantee to definitely become beneficial. In this case, there is no beneficiary designation right holder 14, and the grantee becomes a beneficiary of the stock acquisition rights by fulfilling the beneficiary confirmation condition.

Note that, in the case of trust-type stock acquisition rights, there is also another pattern in which, prior to the occurrence of a beneficiary designation event in a trust, if no response indicating that a specific grantee is designated as a beneficiary for all the stock acquisition rights excluding those to be waived has been obtained, and if there is an intention to designate a specific grantee as a beneficiary afterward, the trustor 11 or a different trustor forms a new trust (second trust) by contributing money or the like and then designates a trustee of the second trust as a beneficiary, so that trust property of the first trust is handed over to the second trust. Even in a case where the first trust is a trust in which a beneficiary confirmation condition is set for a specific grantee and the specific grantee has not fulfilled the beneficiary confirmation condition in the first trust, it is possible to hand over the trust property to the second trust. The second trust may be a trust in which a specific grantee is not determined, or may be a trust in which a beneficiary confirmation condition is set for a specific grantee.

The trustor 11 entrusts stock acquisition rights to the trustee 12. In the present embodiment, the trustor 11 entrusts money and other assets (hereinafter, money and other assets are also simply referred to as "assets") to the trustee 12. Since setting up this trust involves transfer of property through the trust, a tax is levied at a predetermined tax rate if prescribed by law. Note that the trustor 11 may entrust stock acquisition rights and money to the trustee 12 and pay the tax with the cash.

Subsequently, the trustee 12 pays the entrusted assets to the issuing company 10 for stock acquisition rights. The issuing company 10 grants stock acquisition rights at an exercise price corresponding to a current stock price to the trustee 12 corresponding to the amount paid.

Thereafter, until the occurrence of a beneficiary designation event of the trust or the confirmation of whether or not a beneficiary confirmation condition is fulfilled, the trustee 12 continues to manage the entrusted stock acquisition rights. Examples of the beneficiary designation event of the trust include listing of the issuing company 10 unlisted at the time of setting up the trust, or elapse of a predetermined period. Examples of the beneficiary confirmation condition of the trust include employment of the officer or employee with the company for a predetermined period, or obtainment of a rating above a certain level in personnel evaluation. Note that the trustee 12 may exercise the stock acquisition rights using money contributed by the trustor 11 to convert them into shares. Instead of stock acquisition rights or call options, shares may be entrusted, or money may be entrusted for the trustee 12 to acquire shares. Furthermore, crypto-assets or fund units may be entrusted, or money or other assets may be entrusted for the trustee 12 to acquire crypto-assets or fund units. The trustee 12 may borrow all or a part of money from the trustor 11 or another third party.

Note that the trustor of the first trust and the trustor of the second trust may be different. The trustee (first trustee) of the first trust and the trustee (second trustee) of the second trust may be different. The beneficiary designation right holder (first beneficiary designation right holder) of the first trust and the beneficiary designation right holder (second beneficiary designation right holder) of the second trust may be different. In addition, the second trust may be a single trust or a plurality of trusts.

Then, in a case where the beneficiary designation event occurs in the first trust, the beneficiary designation right holder 14 of the first trust can designate a specific beneficiary (beneficiary 13) from among the officers and employees and hand over the stock acquisition rights to the beneficiaries, or can designate the trustee (second trustee) of the second trust as a beneficiary of the first trust and hand over the stock acquisition rights to the second trustee.

In a case where the beneficiary confirmation condition is not fulfilled in the first trust, the trustee 12 as the first trustee may set another person including the predetermined second trustee as a beneficiary, or may designate a beneficiary under the instruction of the beneficiary designation right holder. In a case where a separately determined beneficiary designation event (if any) arrives before it is determined whether or not the beneficiary confirmation condition is fulfilled in the first trust, the trustee 12 as the first trustee may hand over the trust property, that is, the stock acquisition rights to the second trustee.

Handing over the stock acquisition rights to the second trustee in this manner makes it possible, even after the occurrence of the beneficiary designation event in the first trust or even after the determination of non-fulfillment of the beneficiary confirmation condition in the first trust, to continuously grant the stock acquisition rights for future officers and employees. Note that, if prescribed by law, the trust property at the time of the occurrence of the beneficiary designation event in the first trust or at the time of the determination of whether or not the beneficiary confirmation condition is fulfilled in the first trust may be able to be handed over as trust property of the second trust at a then-current book value (book value carryover) by a specified quantity.

If prescribed by law, the trustee 12 as the first trustee and the second trustee may be required to be different. Furthermore, if prescribed by law, the trustee 12 as the first trustee and the second trustee may be the same as long as they have a predetermined qualification. The trustee 12 as the first trustee and the second trustee may be natural persons or legal entities. In addition, the beneficiary designation right holder of the first trust and the beneficiary designation right holder of the second trust may be different or the same. The beneficiary designation right holder of the first trust and the beneficiary designation right holder of the second trust may be natural persons or legal entities.

In the first trust, when the stock acquisition rights are granted to the beneficiary 13, the trust property of the first trust is reduced accordingly. For this reason, the trust administrator 21 may consider adding to (replenishing) the stock acquisition rights. In this case, for example, the trustor 11 may contribute money to increase the trust property, but will bear a new burden. According to the present embodiment, when considering replenishing the stock acquisition rights due to a reduction in the stock acquisition rights of the first trust, it is possible to procure funds using the trust property of the first trust and to increase the trust property with the procured assets. The first trust of which the trust property is increased in this manner can be handed over to the second trust. In order to realize this, in the present embodiment, the trust administrator 21 manages the number of stock acquisition rights remaining as the trust property and, when considering replenishing the stock acquisition rights, instructs the trustee 12 to procure funds using the trust property of the first trust. At this time, in the system of the present embodiment, measures for procuring funds are presented to the trustee 12, such as: obtaining a loan from a lender 21 with the trust property of the first trust as security; exercising the stock acquisition rights of the trust property of the first trust to obtain shares and selling the shares on a stock market 20 to obtain funds; and/or transferring the stock acquisition rights as the trust property of the first trust to a third party. In the system of the present embodiment, whether it is desired to replenish the stock acquisition rights is inquired of the trust administrator 21, and when it is desired to replenish them, the measures for procuring funds are provided to the trustee 12.

The system of the present embodiment may be a system that handles a trust and procures trust property. The system of the present embodiment may be: a system that handles a trust and lends money and other assets; a system that handles a trust and sells stock acquisition rights as trust property or shares obtained by exercising the stock acquisition rights; or a system that handles a trust, lending, and sales. An operating company that operates a stock acquisition right management system 50 to be described later may confirm procurement of money and other assets, that is, lending and sales. The trustor 11 adds the money and other assets procured by the trustee 12 to the trust property of the first trust to create new trust property and replenish the stock acquisition rights.

Loan is made by the lender 22. Loan may be made by the trustee 12 from its own property, or may be made by the operating company of the stock acquisition right management system 50 to be described later. Loan may be made by a non-bank or a financial institution. An entity that obtains the loan may be the trustee 12 (borrowing within the trust as the trustee), a whole or a part of the officers and employees, or a person authorized to do so.

An assessment of capital gain on the stock acquisition rights, a collateral value of the stock acquisition rights, an amount of loan, an interest rate and term, conditions of forced repayment, and the like sometimes vary depending on a lender who makes a loan. Thus, loan information may be obtained from a plurality of lenders for each loan, and the trustee 12 may be allowed to select the lender 22 from among them.

In the system of the present embodiment, if the trust administrator 21 responds with the intention not to obtain a loan or sell shares for replenishing the stock acquisition rights of the first trust, the trustee 12 continues the trust with the trust property as it is.

The system of the present embodiment provides a means for calculating a current unrealized gain on the trust property in a case where the trust administrator 21 desires to replenish the stock acquisition rights, a means for calculating a payment value in a case of issuing the stock acquisition rights at a current time, and a means for obtaining a replenishable number of stock acquisition rights on the basis of the calculated unrealized gain and the calculated payment value.

The means for calculating an unrealized gain first obtains a difference between the strike price (exercise price) of the stock acquisition rights included in trust information of the first trust and a current stock price notified by the trustor or the issuing company, for example, and multiplies the difference by the number of the stock acquisition rights pooled in the first trust to calculate the unrealized gain (in a case where a tax is imposed on the unrealized gain, an after-tax amount may be calculated).

The means for calculating a payment value refers to the current stock price, a stock price fluctuation rate (volatility) of a comparable company, and the like to calculate an approximate value of the payment value in a case of issuing the stock acquisition rights at the current time.

The means for obtaining a replenishable number of stock acquisition rights divides the after-tax unrealized gain by the payment value, for example, thereby obtaining, in the case of replenishing the stock acquisition rights, how many stock acquisition rights can be expanded to at the current time with how many stock acquisition rights already pooled, and presents the result to the trustee 12. The trustee 12 considers procuring funds with reference to the presentation.

In addition, in the system of the present embodiment, if the trustee 12 responds with the intention to obtain a loan or sell the stock acquisition rights or shares, the lender 22 who makes the loan, for example, presents loan information to the trustee 12. In this case, in the system of the present embodiment, a stock price of shares obtained by exercising the stock acquisition rights of the trust property is presented to the trustee 12 on the basis of stock price information from the stock market 20. Note that, in a case where the lender 22 makes a monetary loan corresponding to the capital gain on the stock acquisition rights to the trustee 12, a security interest is created in the stock acquisition rights. In a case where the trustee 12 obtains the loan based on the capital gain on the stock acquisition rights in the trust property, money is recorded as an asset in the trust property and a liability is recorded as well.

After the trustee 12 obtains a loan or sells the stock acquisition rights or shares under the instruction of the trust administrator 21, in a case where the beneficiary designation event occurs and a beneficiary is designated in the first trust, or in a case where a person other than the provisional grantee becomes a beneficiary due to non-fulfillment of the beneficiary confirmation condition in the first trust, the trustee 12 can hand over the stock acquisition rights, money, and liabilities, which are the trust property, to the next beneficiary at a book value thereof. The trustee 12 may prohibit, until the loan is paid off, the trustor 11, the beneficiary designation right holder 14, and the trust administrator 21 from giving instructions to transfer or waive the stock acquisition rights pledged as security.

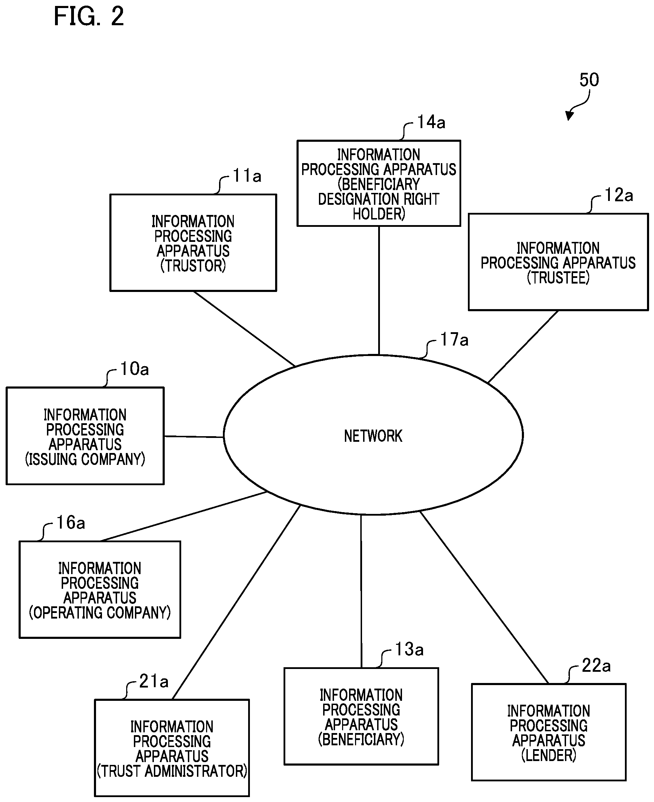

Fig. 2 is a block diagram illustrating a schematic configuration of the stock acquisition right management system 50 according to the first embodiment of the present invention. The stock acquisition right management system 50 according to the present embodiment includes information processing apparatuses 10a, 11a, 12a, 13a, 14a, 16a, 21a, and 22a connected to each other via a network 17. The stock acquisition right management system 50 manages a trust of stock acquisition rights. The stock acquisition right management system 50 implements the scheme described with reference to Fig. 1.

The information processing apparatus 10a is an information processing apparatus operated by a person in charge of the issuing company 10. The information processing apparatus 11a is an information processing apparatus operated by the trustor 11. The information processing apparatus 12a is an information processing apparatus operated by the trustee 12. The information processing apparatus 13a is an information processing apparatus operated by the beneficiary 13. The information processing apparatus 14a is an information processing apparatus operated by the beneficiary designation right holder 14. Beneficiary designation right holders may differ between trusts such as the first trust and the second trust, or they may be the same. Here, the beneficiary designation right holder 14 represents the beneficiary designation right holders. The information processing apparatus 16a is an information processing apparatus operated by a person in charge of the operating company that operates the stock acquisition right management system 50. The information processing apparatus 21a is an information processing apparatus operated by the trust administrator 21. The information processing apparatus 22a is an information processing apparatus operated by the lender 22. For example, the Internet is used as the network 17, or any known network can be used regardless of whether it is wired or wireless. The stock acquisition right management system 50 may not include at least one of the information processing apparatuses 10a, 11a, 12a, 13a, 14a, 16a, 21a, and 22a. The stock acquisition right management system 50 may include an information processing apparatus other than the information processing apparatuses 10a, 11a, 12a, 13a, 14a, 16a, 21a, and 22a.

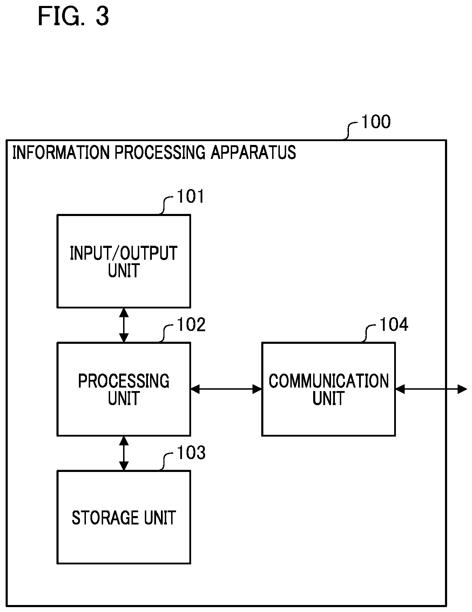

Fig. 3 is a block diagram illustrating a configuration of each information processing apparatus illustrated in Fig. 2. Fig. 3 shows configurations of the information processing apparatuses 10a, 11a, 12a, 13a, 14a, 16a, 21a, and 22a illustrated in Fig. 2 as the configuration of an information processing apparatus 100. The information processing apparatus 100 is at least one of the information processing apparatuses 10a, 11a, 12a, 13a, 14a, 16a, 21a, and 22a. Each of the information processing apparatuses 10a, 11a, 12a, 13a, 14a, 16a, 21a, and 22a may have the same configuration, or may have a configuration different from those of the other information processing apparatuses.

The information processing apparatus 100 includes a processing unit 102 that performs various types of processing, an input/output unit 101 that performs input/output for an operator, a storage unit 103 that stores various types of data, and a communication unit 104 that performs communication via the network 17. The information processing apparatus 100 is a computer. The information processing apparatus 100 may be any computer. The information processing apparatus 100 may be an apparatus generally called a personal computer or an apparatus called a supercomputer. The information processing apparatus 100 may be an apparatus called a smartphone or a tablet. The processing unit 102 is an arithmetic device called a CPU or an MPU. The processing unit 102 executes a program stored in the storage unit 103. The processing unit 102 stores various types of data related to information processing in the storage unit 103. When the information processing apparatus 100 registers information, it means that the processing unit 102 stores the information in the storage unit 103. The storage unit 103 may be any known storage device such as a RAM, a ROM, a magnetic storage device, or an optical storage device. The input/output unit 101 includes input/output devices such as a keyboard, a mouse, and a display. The processing unit 102 executes information processing in accordance with information input by an operator via the input/output unit 101. The processing unit 102 executes information processing in accordance with information input via the communication unit 104.

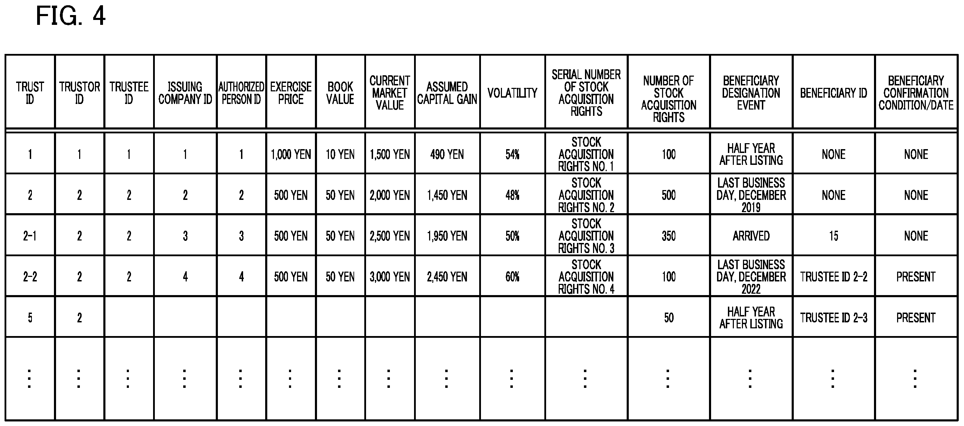

Fig. 4 is a diagram illustrating an example of trust information stored in the storage unit 103 of the information processing apparatus 16a illustrated in Fig. 2. In the present embodiment, the trust information is stored in the information processing apparatus 16a operated by a person in charge of the operating company that operates the stock acquisition right management system 50. The trust information may be stored in another information processing apparatus.

The stock acquisition right management system 50 can also manage a trust of stock acquisition rights in a state where a beneficiary is determined. A trust ID included in the trust information is an ID that can identify each trust, and is uniquely assigned to each trust. A trustor ID included in the trust information is an ID that can identify a trustor of the trust. A trustee ID included in the trust information is an ID that can identify a trustee of the trust. An issuing company ID included in the trust information is an ID that can identify an issuing company that issues stock acquisition rights of the trust. An authorized person ID included in the trust information is an ID that can identify an authorized person of the trust. The trust information may include authorized person information that is information on the authorized person. The authorized person information includes the authorized person ID. An exercise price included in the trust information is an exercise price of the stock acquisition rights of the trust. A beneficiary designation event included in the trust information is an event or date when a beneficiary of the trust is designated. A book value included in the trust information is a payment value of the stock acquisition rights paid when the trustee of the trust is granted the stock acquisition rights, a market value of the stock acquisition rights when the trustee of the trust is entrusted with the stock acquisition rights, or the like. A current market value included in the trust information is a current value of shares obtained by exercising the stock acquisition rights which are the trust property of the trust. An assumed capital gain included in the trust information is an assumed capital gain on the shares obtained by exercising the stock acquisition rights which are the trust property of the trust. Volatility included in the trust information is volatility (stock price fluctuation rate) of the shares obtained by exercising the stock acquisition rights which are the trust property of the trust. When the shares are not listed, volatility of a comparable industry may be displayed. A serial number of stock acquisition rights included in the trust information is a serial number of the stock acquisition rights which are the trust property of the trust. A number of stock acquisition rights included in the trust information is the number of the stock acquisition rights which are the trust property of the trust. Beneficiary information included in the trust information is information on a beneficiary of the stock acquisition rights of the trust. A beneficiary ID included in the beneficiary information is an ID that can identify the beneficiary. A number of stock acquisition rights included in the beneficiary information is the number of stock acquisition rights granted to the beneficiary. In a case where the beneficiary is not confirmed, the number of stock acquisition rights is the number of the stock acquisition rights held in the trust of the trust ID. A beneficiary confirmation condition/date included in the trust information is the presence or absence of a beneficiary confirmation condition of the trust and/or a date when the beneficiary is confirmed.

The record with the trust ID '1' in Fig. 4 is a record of a trust (hereinafter referred to as "bulk grant trust") in which a beneficiary is designated for all entrusted stock acquisition rights simultaneously and in bulk when a beneficiary designation event occurs. Normally, no beneficiary exists for the entrusted stock acquisition rights until the beneficiary designation event occurs. In this case, the trust is of a beneficiary unspecified type.

The record with the trust ID '2' in Fig. 4 is a record of a trust (hereinafter referred to as "multiple trust") in which stock acquisition rights are repeatedly re-entrusted after the stock acquisition rights are entrusted and a beneficiary designation event occurs. The content of the multiple trust may be initially the same as that of the bulk grant trust, except for the feature that the beneficiary designation events are chained on certain dates. In this case, the trust is of a beneficiary unspecified type.

The record with the trust ID `2-1' in Fig. 4 is a record of a multiple trust, and is a record about a beneficiary who has been confirmed after the occurrence of a beneficiary designation event. This record indicates a pattern in which the beneficiary designation event has arrived in the multiple trust, and a pattern in which the beneficiary has been determined and the trust has not been terminated.

The record with the trust ID `2-2' in Fig. 4 is a record of a multiple trust, and is a record about a second trust to which stock acquisition rights are handed over from a trust in which a beneficiary designation event has occurred. In this record, the issuing company ID, the exercise price, the book value, and the serial number of stock acquisition rights are carried over from the first trust. As the number of stock acquisition rights, the number of stock acquisition rights to be handed over is registered.

In the trust information, in a case where a granted person is provisionally determined without a beneficiary being confirmed, a provisional person is registered in the beneficiary field. That is, the trustee is registered as the beneficiary, the record is transferred to a third trust of which beneficiary is the grantee, and then a condition and a term for confirming the beneficiary are registered.

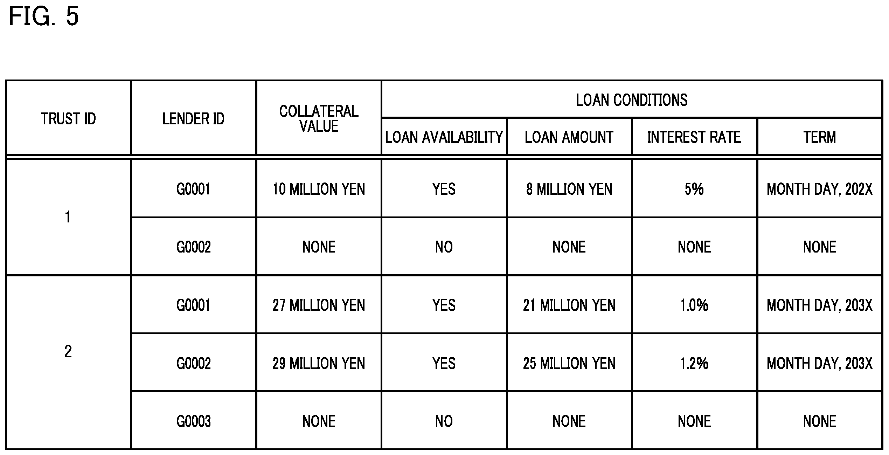

Fig. 5 is a diagram illustrating an example of loan information stored in the storage unit 103 of the information processing apparatus 16a illustrated in Fig. 2. In the present embodiment, the loan information is stored in the information processing apparatus 16a operated by a person in charge of the operating company that operates the stock acquisition right management system 50. The loan information may be stored in another information processing apparatus.

A trust ID included in the loan information is an ID linked to the trust ID of the trust information of Fig. 4. A lender ID included in the loan information is an ID that can identify a lender who makes a loan to the trust identified by the trust ID. A loan case is identified by a combination of the trust ID and the lender ID. A collateral value included in the loan information is a collateral value of trust assets identified by the trust ID. The loan information includes loan condition information that is information on loan conditions of the loan case. A loan availability included in the loan condition information indicates availability of the loan to the trust. A loan amount included in the loan condition information indicates an amount of the loan available to the trust. An interest rate included in the loan condition information indicates an interest rate of the loan to the trust. A term included in the loan condition information indicates a repayment term of the loan to the trust. The loan information may include more detailed loan conditions for each loan case. The loan amount is an example of the loan conditions.

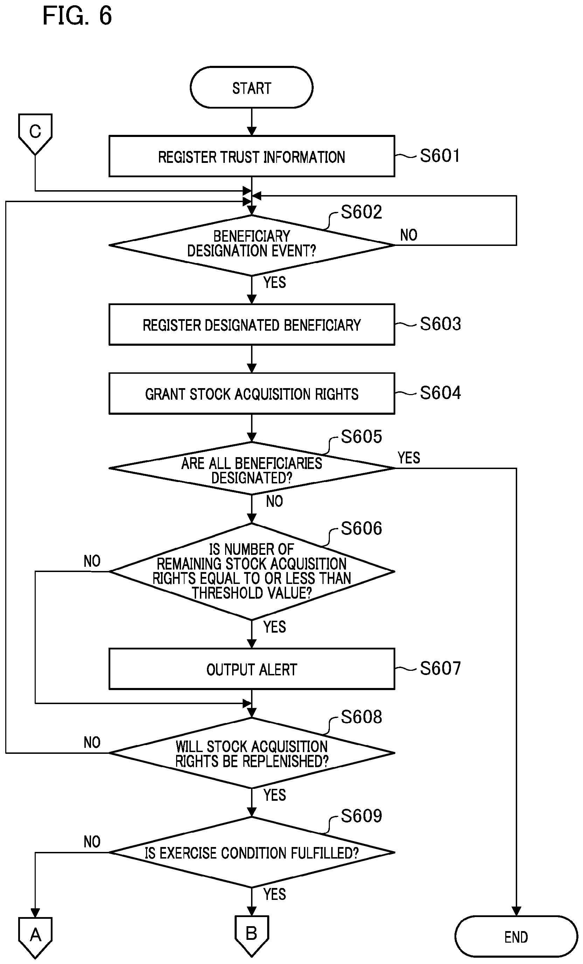

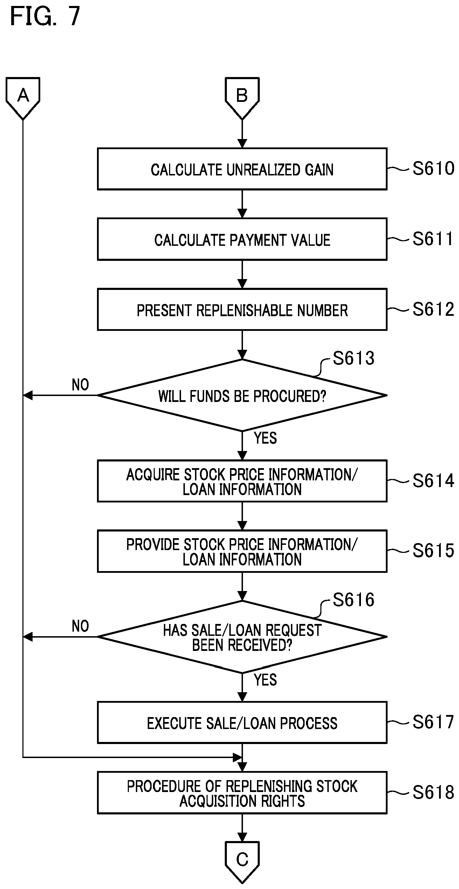

Hereinafter, operation of the stock acquisition right management system 50 of the present embodiment will be described. Fig. 6 is a flowchart illustrating processing by the stock acquisition right management system 50. Fig. 7 is a flowchart illustrating processing subsequent to Fig. 6 by the stock acquisition right management system 50. The processing by the stock acquisition right management system 50 may be executed in a distributed manner by the information processing apparatuses 10a, 11a, 12a, 13a, 14a, 16a, 21a, and 22a illustrated in Fig. 2. For example, the information processing apparatuses other than the information processing apparatus 16a may be used as information input/output terminal apparatuses, and the information processing apparatus 16a may process and store information. In the present embodiment, the information processing apparatus 16a processes and stores information, and provides a user interface for information input/output to the other information processing apparatuses via the network 17.

The information processing apparatus 16a issues and registers in advance each ID included in the trust information illustrated in Fig. 4 and the loan information illustrated in Fig. 5.

In step S601, the information processing apparatus 16a registers each piece of information of the trust information of Fig. 4 as first trust information according to the occurrence of a trust. At this time, in a case where the beneficiary information in the trust information is undetermined, 'none' is entered, for example. Thereafter, the information processing apparatus 16a registers the beneficiary information when it is determined. The information processing apparatus 16a may execute a process of calculating fees or expenses for the trust and billing them to the trustor 11 or the issuing company 10 while the trust is in operation.

In step S602, the information processing apparatus 16a makes a determination regarding the beneficiary designation event of the trust. Examples of the beneficiary designation event include listing of the issuing company 10 unlisted at the time of setting up the trust, or elapse of a predetermined period. In step S602, the information processing apparatus 16a determines whether it is a certain period of time prior to the occurrence of the beneficiary designation event of the trust. Whether it is a certain period of time prior to the occurrence of the beneficiary designation event may be input to the stock acquisition right management system 50 by the trustor 11, a person in charge of the issuing company 10, or a person in charge of the operating company 16. Alternatively, the information processing apparatus 16a may automatically determine elapse of a trust period, for example. If it is not the certain period of time prior to the occurrence of the beneficiary designation event, the information processing apparatus 16a continues the trust without change. If it is the certain period of time prior to the occurrence of the beneficiary designation event, the information processing apparatus 16a proceeds to step S603.

In the present embodiment, as described below, it is possible to replenish stock acquisition rights in the trust in response to the occurrence of the beneficiary designation event. However, the present invention is not limited thereto, and it may be possible to replenish stock acquisition rights in the trust at an arbitrary timing.

In step S603, the information processing apparatus 16a registers, as a reservation, a beneficiary to be designated in response to the occurrence of the beneficiary designation event in the beneficiary information included in the trust information of the trust. Note that, in a corporate taxation trust, beneficiaries are required to be designated simultaneously and in bulk. Thus, reservation registration and setting of a second trust are completed before the beneficiary designation event occurs, so that a beneficiary 13 including a second trustee will be confirmed simultaneously and in bulk when the beneficiary designation event occurs.

In step S604, the information processing apparatus 16a grants stock acquisition rights to the designated beneficiary 13 following the occurrence of the beneficiary designation event. In this process, specifically, the information processing apparatus 16a notifies the trustee 12 to grant the stock acquisition rights to the beneficiary 13 (the beneficiary registered in step S603) following the occurrence of the beneficiary designation event, thereby confirming the beneficiary 13 in the reservation registration as a beneficiary. Note that the beneficiary designation event includes a process such as a committee resolution for designating a beneficiary.

In step S605, the information processing apparatus 16a inquires whether to designate all beneficiaries for the trust. In other words, this process corresponds to inquiring whether to continue the trust of the stock acquisition rights pertaining to the trust information of the first trust.

The inquiry in step S605 is made, for example, to the trustor 11 (for example, the information processing apparatus 11a operated by the trustor 11). In a case where a person (beneficiary designation right holder 14) other than the trustor 11 is determined as a beneficiary designation right holder by the trustor 11, the inquiry is made to the person. In a case where the beneficiary designation right holder 14 is the issuing company 10, for example, the inquiry is made to the issuing company 10 (for example, the information processing apparatus 10a operated by a person in charge of the issuing company 10). The issuing company 10 determines the degree of contribution or the like in the company and designates the beneficiary to grant the stock acquisition rights to an employee or the like.

The trustor 11 or the beneficiary designation right holder 14 who has received the inquiry in step S605 responds whether or not to designate the beneficiary for all or some of the stock acquisition rights. If the trustor 11 or the beneficiary designation right holder 14 designates all beneficiaries, the information processing apparatus 16a registers, for the trust information, for example, that the trust of the stock acquisition rights for which the beneficiary is designated this time has been terminated, and ends the processing. Note that, the trust may be continued without granting the stock acquisition rights even after the beneficiary is designated. Depending on the response to the inquiry in step S605, the information processing apparatus 16a updates the trust information to reflect that the stock acquisition rights of the trust indicated by the trust information have been granted to the beneficiary.

If the trustor 11 or the beneficiary designation right holder 14 who has received the inquiry in step S605 does not perform reservation registration of the beneficiary for all of the stock acquisition rights by inputting to the information processing apparatus 11a or the information processing apparatus 14a, the information processing apparatus 16a that has identified this checks the number of stock acquisition rights remaining in the trust.

In step S606, if the number of the remaining stock acquisition rights of the trust is equal to or less than a predetermined threshold value, the information processing apparatus 16a outputs an alert indicating this (S607). This alert is transmitted to the information processing apparatus 21a of the trust administrator 21, for example. The trust administrator 21, who manages the trust, determines whether to replenish the stock acquisition rights in the trust on the basis of the alert output in step S607, for example. In a case where the stock acquisition rights are replenished, the trust administrator 21 instructs the trustee 12 to replenish the stock acquisition rights. This instruction is transmitted from the information processing apparatus 21a to the information processing apparatus 12a via the information processing apparatus 16a, for example. In a case where it is necessary to procure funds for replenishment of the stock acquisition rights, the trust administrator 21 instructs the trustee 12 to procure funds. This instruction is also transmitted from the information processing apparatus 21a to the information processing apparatus 12a via the information processing apparatus 16a, for example. Even in a case where no alert is output in step S607, the trust administrator 21 may instruct the trustee 12 to replenish the stock acquisition rights and procure funds.

In step S608, the information processing apparatus 16a inquiries of the information processing apparatus 12a about replenishment of the stock acquisition rights. The trustee 12 inputs a response to the inquiry in step S606 to the information processing apparatus 12a, and the information processing apparatus 12a that has received this input transmits the input response to the information processing apparatus 16a. If the response from the information processing apparatus 12a indicates that the stock acquisition rights are replenished, the information processing apparatus 16a proceeds to step S609. If the response from the information processing apparatus 12a indicates that the stock acquisition rights are not replenished, the information processing apparatus 16a returns to step S602.

In step S609, the information processing apparatus 16a determines whether the stock acquisition rights in the trust fulfill an exercise condition. This can be determined, for example, on the basis of information as to whether or not the exercise condition is fulfilled input by the trust administrator 21. A reason for making this determination is that, the stock acquisition rights cannot be exercised if not fulfilling the exercise condition, so that the trustee 12 is unable to sell the stock acquisition rights except in special cases such as when the issuing company arbitrarily purchases them or to take out a secured loan. If the exercise condition is not fulfilled in step S609, the information processing apparatus 16a proceeds to step S618, and if the exercise condition is fulfilled, the information processing apparatus 16a proceeds to step S610.

In step S610, the information processing apparatus 16a calculates an unrealized gain on the stock acquisition rights as the current trust property. Specifically, the information processing apparatus 16a first obtains a difference between the strike price (exercise price) of the stock acquisition rights included in the trust information of the first trust and a current stock price notified by the trustor 11 or the issuing company 10 or a current stock price obtained from the stock market 20, and multiplies the obtained difference by the number of the stock acquisition rights pooled in the first trust to calculate the unrealized gain. It is desirable that this unrealized gain be after tax.

In step S611, the information processing apparatus 16a calculates a payment value in a case of issuing the stock acquisition rights at a current time. Specifically, the information processing apparatus 16a refers to the current stock price, the stock price fluctuation rate (volatility) of a comparable company included in the trust information of the first trust, and the like to calculate an approximate value of the payment value in a case of issuing the stock acquisition rights at the current time.

In step S612, the information processing apparatus 16a obtains a replenishable number of stock acquisition rights on the basis of the calculated unrealized gain and the calculated payment value. Specifically, the information processing apparatus 16a divides the unrealized gain by the payment value, for example, thereby obtaining, in the case of replenishing the stock acquisition rights, how many stock acquisition rights can be expanded to at the current time with how many stock acquisition rights already pooled, and presents the result to the trustee 12. The trustee 12 considers procuring funds with reference to the presentation.

In step S613, the information processing apparatus 16a inquires of the trustee 12 whether to procure funds for replenishing the stock acquisition rights entrusted in the first trust. If the trustee 12 responds to this inquiry with the intention to procure funds, the information processing apparatus 16a proceeds to step S614, and if the trustee 12 responds with the intention not to procure funds, the information processing apparatus 16a proceeds to step S618. Specifically, the information processing apparatus 16a makes the inquiry to the information processing apparatus 12a of the trustee 12, and the trustee 12 inputs an answer to the inquiry to the information processing apparatus 12a. The information processing apparatus 12a that has received this input transmits the answer to the inquiry to the information processing apparatus 16a.

In step S614, the information processing apparatus 16a acquires stock price information from the stock market 20, and reads and acquires loan information illustrated in Fig. 5 from the storage unit 103. In step S615, the information processing apparatus 16a transmits the stock price information and the loan information acquired in step S614 to the information processing apparatus 12a of the trustee 12, thereby providing the information to the trustee 12.

The trustee 12 refers to the stock price information and the loan information provided in step S615, and selects a measure to be used for procuring funds. Examples of measures used for procuring funds include a measure for procuring funds by exercising entrusted stock acquisition rights to obtain shares and selling the shares, and a measure for procuring funds by obtaining a loan with entrusted stock acquisition rights as security. The trustee 12 who has selected a measure for procuring funds inputs the selected measure for procuring funds as a sale/loan request to the information processing apparatus 12a. The information processing apparatus 12a transmits the input sale/loan request to the information processing apparatus 16a. In step S616, the information processing apparatus 16a determines whether the sale/loan request has been received from the information processing apparatus 12a. If the sale/loan request has not been received, the information processing apparatus 16a proceeds to step S618. If the sale/loan request has been received, the information processing apparatus 16a proceeds to step S617.

In step S617, the information processing apparatus 16a executes a sale/loan process. Specifically, the information processing apparatus 16a adopts the measure for procuring funds selected by the trustee 12, for example: prepares a contract necessary for a procedure of exercising the stock acquisition rights as the trust property of the first trust to convert them into shares and selling the shares on the stock market 20, and presents the contract to the trustee 12 for the trustee 12 to execute the procedure; or prepares a contract necessary for a procedure of securing the stock acquisition rights as the trust property of the first trust and obtaining a loan from the lender 22, and presents the contract to the trustee 12 for trustee 12 to execute the procedure. As a result, the trustee 12 procures funds for increasing the trust property. The contract may be concluded with an electronic signature.

In step S618, the information processing apparatus 16a prompts the trustee 12 to perform a procedure of replenishing the stock acquisition rights entrusted in the first trust with the funds procured in step S617 or contributed funds. For example, when the trustee 12 presses a confirmation button in the information processing apparatus 12a, in response to this, the information processing apparatus 16a prepares a contract necessary for the procedure of replenishing the stock acquisition rights, and presents the contract to the trustee 12 for the trustee 12 to execute the procedure. The information processing apparatus 16a updates the trust information to reflect the replenishment of the stock acquisition rights. That is, the information processing apparatus 16a records that stock acquisition rights have been replenished in the trust indicated by the first trust information. After step S618, the information processing apparatus 16a may return to step S602 or may end the processing.

In a case where the first trust is handed over to the second trust, the trustor 11 advances a procedure of setting up the second trust by, for example, entrusting money or the like. For example, when the trustor 11 presses a confirmation button in the information processing apparatus 11a, in response to this, the information processing apparatus 16a executes a process to advance a procedure necessary for making a contract of the second trust. For example, a process of concluding the trust contract with an electronic signature or a process of outputting a notification prompting contribution of money to the trustee 12 is executed. The information processing apparatus 16a registers trust information of the second trust so as to carry over the book value and the information on the replenishment of the stock acquisition rights included in the trust information of the first trust to the second trust without change. The information processing apparatus 16a registers, for the trust information of the first trust, that the first trust has been handed over to the second trust and has been terminated, for example.

The stock acquisition right management system 50 may create a security interest in the stock acquisition rights for a loan. The stock acquisition right management system 50 may create a security interest in assets other than the stock acquisition rights for a loan. In addition, the stock acquisition right management system 50 may constantly monitor a market value of shares subject to the stock acquisition rights with a loanable value set, and then, in the case of collateral deficiency, transfer the ownership of the shares subject to the stock acquisition rights to a person who has made the loan.

(1) The present invention is an information processing apparatus including: a first storage means configured to store first trust information that is information regarding that stock acquisition rights are entrusted by a trustor to a trustee; an inquiry means configured to inquire whether to designate a beneficiary for all or some of the stock acquisition rights a certain period of time prior to occurrence of a beneficiary designation event of a trust indicated by the first trust information; a response receiving means configured to receive a response to an inquiry made by the inquiry means; an update means configured to update the first trust information to reflect that the stock acquisition rights of the trust indicated by the first trust information have been granted to a beneficiary depending on a response received by the response receiving means; a first calculation means configured to calculate an unrealized gain on stock acquisition rights pertaining to the first trust information updated by the update means; a second calculation means configured to calculate a payment value in a case of issuing, at a current time, the stock acquisition rights pertaining to the first trust information updated by the update means; and a replenishable number presentation means configured to present a replenishable number of stock acquisition rights that is obtained based on the unrealized gain calculated by the first calculation means and the payment value calculated by the second calculation means. Therefore, since the replenishable number can be presented when the stock acquisition rights are replenished in the first trust indicated by the first trust information, it is possible to improve utilization of assets in trust.
(2) According to the present invention, the information processing apparatus further includes: an output means configured to output an alert when a number of the stock acquisition rights pertaining to the first trust information updated by the update means is equal to or less than a threshold value. This make it possible to know the timing to perform replenishment without constantly monitoring the number of stock acquisition rights in the trust.
(3) According to the present invention, the information processing apparatus further includes: a procurement means configured to procure funds for replenishment of the stock acquisition rights pertaining to the first trust information updated by the update means. This makes it possible to replenish the stock acquisition rights without contributing new funds.
(4) According to the present invention, the means for procurement includes a contract preparation means configured to prepare a contract for procuring funds and a contract for acquiring stock acquisition rights for replenishment. This makes it possible to eliminate complexity of a procedure at the time of replenishing the stock acquisition rights.
(5) According to the present invention, the information processing apparatus further includes: a replenishment recording means configured to record, for the first trust information, that stock acquisition rights have been replenished in the trust indicated by the first trust information. Therefore, since replenishment of the stock acquisition rights can be managed, it is possible to improve utilization of assets in trust.
(6) According to the present invention, the information processing apparatus further includes: a second storage means configured to store, when all beneficiaries are not designated in a response received by the response receiving means, second trust information that is information regarding that stock acquisition rights for which a beneficiary has not been designated among the stock acquisition rights pertaining to the first trust information and the stock acquisition rights that have been replenished in the trust indicated by the first trust information are entrusted as trust property by the trustor to a second trustee. Therefore, since the handover from the first trust indicated by the first trust information to the second trust indicated by the second trust information can be managed, it is possible to improve utilization of assets in trust.
(7) According to the present invention, the information processing apparatus further includes: a reading means configured to read a first book value of the stock acquisition rights pertaining to the first trust information, the first book value being included in the first trust information and stored in the first storage means, wherein the second storage means stores a second book value of stock acquisition rights pertaining to the second trust information by carrying over the first book value read by the reading means, the second book value being included in the second trust information. Therefore, since the book value can be carried over at the time of the handover from the first trust indicated by the first trust information to the second trust indicated by the second trust information, it is possible to improve utilization of assets in trust.
(8) According to the present invention, the information processing apparatus further includes: a determination means configured to determine whether the stock acquisition rights pertaining to the first trust information fulfill an exercise condition. This makes it possible to exclude a case where the condition for exercising the stock acquisition rights is not fulfilled, and to clarify a target.

Although the preferred embodiments of the present invention have been described above, the present invention is not limited to these embodiments, and various modifications and changes can be made within the scope of the gist of the present invention. These embodiments and modifications thereof are included in the scope and gist of the invention, and are also included in the scope of the invention described in the claims and the equivalents thereof.

The present application claims priority based on Japanese Patent Application No. 2022-10188 filed on January 26, 2022, the entire content of which is incorporated herein by reference.

### Reference Signs List

- 10: issuing company
- 11: trustor
- 12: trustee
- 13: beneficiary
- 14: beneficiary designation right holder
- 20: stock market
- 22: lender

## Claims

1. An information processing apparatus comprising:
a first storage means configured to store first trust information that is information regarding that stock acquisition rights are entrusted by a trustor to a trustee;
an inquiry means configured to inquire whether to designate a beneficiary for all or some of the stock acquisition rights a certain period of time prior to occurrence of a beneficiary designation event of a trust indicated by the first trust information;
a response receiving means configured to receive a response to an inquiry made by the inquiry means;
an update means configured to update the first trust information to reflect that the stock acquisition rights of the trust indicated by the first trust information have been granted to a beneficiary depending on a response received by the response receiving means;
a first calculation means configured to calculate an unrealized gain on stock acquisition rights pertaining to the first trust information updated by the update means;
a second calculation means configured to calculate a payment value in a case of issuing, at a current time, the stock acquisition rights pertaining to the first trust information updated by the update means; and
a replenishable number presentation means configured to present a replenishable number of stock acquisition rights that is obtained based on the unrealized gain calculated by the first calculation means and the payment value calculated by the second calculation means.

2. The information processing apparatus according to claim 1, further comprising:
an output means configured to output an alert when a number of the stock acquisition rights pertaining to the first trust information updated by the update means is equal to or less than a threshold value.

3. The information processing apparatus according to claim 1 or 2, further comprising:
a procurement means configured to procure funds for replenishment of the stock acquisition rights pertaining to the first trust information updated by the update means.

4. The information processing apparatus according to any one of claims 1 to 3, wherein
the means for procurement includes a contract preparation means configured to prepare a contract for procuring funds and a contract for acquiring stock acquisition rights for replenishment.

5. The information processing apparatus according to any one of claims 1 to 4, further comprising:
a replenishment recording means configured to record, for the first trust information, that stock acquisition rights have been replenished in the trust indicated by the first trust information.

6. The information processing apparatus according to claim 5, further comprising:
a second storage means configured to store, when all beneficiaries are not designated in a response received by the response receiving means, second trust information that is information regarding that stock acquisition rights for which a beneficiary has not been designated among the stock acquisition rights pertaining to the first trust information and the stock acquisition rights that have been replenished in the trust indicated by the first trust information are entrusted as trust property by the trustor to a second trustee.

7. The information processing apparatus according to claim 6, further comprising:
a reading means configured to read a first book value of the stock acquisition rights pertaining to the first trust information, the first book value being included in the first trust information and stored in the first storage means, wherein
the second storage means stores a second book value of stock acquisition rights pertaining to the second trust information by carrying over the first book value read by the reading means, the second book value being included in the second trust information.

8. The information processing apparatus according to any one of claims 1 to 7, further comprising:
a determination means configured to determine whether the stock acquisition rights pertaining to the first trust information fulfill an exercise condition.

9. A control method for an information processing apparatus, the method comprising:
a first storage step of storing first trust information that is information regarding that stock acquisition rights are entrusted by a trustor to a trustee;
an inquiry step of inquiring whether to designate a beneficiary for all or some of the stock acquisition rights a certain period of time prior to occurrence of a beneficiary designation event of a trust indicated by the first trust information;
a response receiving step of receiving a response to an inquiry made in the inquiry step;
an update step of updating the first trust information to reflect that the stock acquisition rights of the trust indicated by the first trust information have been granted to a beneficiary depending on a response received in the response receiving step;
a first calculation step of calculating an unrealized gain on stock acquisition rights pertaining to the first trust information updated in the update step;
a second calculation step of calculating a payment value in a case of issuing, at a current time, the stock acquisition rights pertaining to the first trust information updated in the update step; and
a replenishable number presentation step of presenting a replenishable number of stock acquisition rights that is obtained based on the unrealized gain calculated in the first calculation step and the payment value calculated in the second calculation step.

10. A program that causes a computer to function as each means included in the information processing apparatus according to any one of claims 1 to 8.
